# EUROPEAN PATENT APPLICATION

(11) **EP 4 831 790 A1**
(43) Date of publication of application: **28.10.2026**
(21) Application number: 24920028.8
(22) Date of filing: 31.12.2024
(51) Int. Cl.: G06F 7/16

(54) **METHOD AND APPARATUS FOR ATTENTION CALCULATION IN ARTIFICIAL INTELLIGENCE MODEL**

(30) Priority: 26.01.2024 CN 202410124904
(71) Applicant: Huawei Technologies Co., Ltd., Shenzhen, Guangdong 518129 (CN)
(72) Inventor: FU, Yong, Shenzhen, Guangdong 518129 (CN); XU, Hua, Shenzhen, Guangdong 518129 (CN); ZHANG, Yusheng, Shenzhen, Guangdong 518129 (CN)
(74) Representative: MERH-IP Matias Erny Reichl Hoffmann Patentanwälte PartG mbB
(86) International application number: PCT/CN2024/144470
(87) International publication number: WO 2025/156950

(57) **Abstract**

Embodiments of this application belong to the field of artificial intelligence technologies, and provide a method and an apparatus for attention calculation in an artificial intelligence model. The method includes: obtaining a plurality of elements on which attention calculation is to be performed; generating a Q matrix, a K matrix, and a V matrix required for attention calculation corresponding to the plurality of elements; determining a location of valid data in a relational matrix corresponding to the Q matrix and the K matrix in the relational matrix; determining calculation data for matrix multiplication calculation in the Q matrix and the K matrix based on the determined location of the valid data in the relational matrix; performing matrix multiplication calculation on the determined calculation data in the Q matrix and the K matrix to obtain the relational matrix; and performing an operation on the relational matrix and the V matrix to implement the attention calculation. According to this application, invalid data can be prevented from participating in attention calculation, thereby improving efficiency of attention calculation.

## Description

This application claims priority to Chinese Patent Application No. 202410124904.9, filed on January 26, 2024 and entitled "METHOD AND APPARATUS FOR ATTENTION CALCULATION IN ARTIFICIAL INTELLIGENCE MODEL", which is incorporated herein by reference in its entirety.

### TECHNICAL FIELD

This application relates to the field of artificial intelligence technologies, and in particular, to a method and an apparatus for attention calculation in an artificial intelligence model.

### BACKGROUND

The transformer is a type of a neural network architecture and serves as a core structure of a current popular artificial intelligence (Artificial Intelligence, AI) large model. Attention (attention) calculation involved in the transformer may generate text features for input text of the AI large model, so that the AI large model can better "understand" the input text, resulting in more accurate processing of the input text by the AI large model.

During attention calculation, Q, K, and V matrices may be first generated for the input text, and then matrix operations are performed on the Q, K, and V matrices, to obtain the text features of the input text.

However, in the current AI large model, a mask (mask) matrix is also needed to participate in the matrix operations on the Q, K, and V matrices, to filter out invalid data in the Q, K, and V matrices in the operation process. Nevertheless, this reduces efficiency of attention calculation.

### SUMMARY

Embodiments of this application provide a method and an apparatus for attention calculation in an artificial intelligence model, to improve efficiency of attention calculation. Corresponding technical solutions are as follows:
According to a first aspect, a method for attention calculation in an artificial intelligence model is provided. The method includes: obtaining a plurality of elements on which attention calculation is to be performed, where an order relationship exists between the plurality of elements; generating a Q matrix, a K matrix, and a V matrix required for attention calculation corresponding to the plurality of elements; determining a location of valid data in a relational matrix obtained by performing matrix multiplication on the Q matrix and the K matrix in the relational matrix, where the valid data identifies a relationship between each element and an element at a specified location in the plurality of elements; determining calculation data for matrix multiplication calculation in the Q matrix and the K matrix based on the determined location of the valid data in the relational matrix; performing matrix multiplication calculation on the determined calculation data in the Q matrix and the K matrix to obtain the relational matrix; and performing an operation on the relational matrix and the V matrix to implement the attention calculation.

The plurality of elements on which attention calculation is to be performed may be a plurality of tokens included in input text, and the order relationship between the plurality of elements is an order of the tokens in the input text. The relational matrix is a similarity matrix corresponding to the Q matrix and the K matrix. The valid data is an element that needs to participate in attention calculation in the relational matrix, and the location of the valid data in the relational matrix may be set by technical personnel.

In the solution provided in this application, in a process of performing attention calculation, when the relational matrix of the Q matrix and the K matrix is calculated, the calculation data to be used for the Q matrix and the K matrix may be first determined based on the location of the valid data in the relational matrix, and then the valid data in the relational matrix is calculated based on the calculation data. In this way, in a process of calculating the relational matrix, invalid data is prevented from participating in calculation, thereby improving calculation efficiency of the relational matrix, and further improving efficiency of attention calculation. In addition, because the relational matrix calculated in this application mainly includes the valid data, invalid data can be further prevented from participating in subsequent attention calculation, thereby further improving efficiency of attention calculation.

In an implementation, the determining the location of the valid data in the relational matrix obtained by performing the matrix multiplication on the Q matrix and the K matrix in the relational matrix includes: obtaining setting information of invalid data in the artificial intelligence model, where the invalid data is a relationship between the plurality of elements that does not need to be considered when the attention calculation is performed; and determining the location of the valid data in the relational matrix obtained by performing the matrix multiplication on the Q matrix and the K matrix in the relational matrix based on the setting information.

The setting information of the invalid data in the artificial intelligence model may include a location of the invalid data in the relational matrix. In this way, a location other than the location of the invalid data in the relational matrix is the location corresponding to the valid data. In an example, the setting information may be a preset mask matrix whose size is the same as that of the relational matrix, and each element value in the mask matrix indicates whether an element at a same location in the relational matrix is invalid data or valid data. In this way, the location of the valid data in the relational matrix is determined, so that locations of the calculation data used to calculate the valid data in the Q matrix and the K matrix can be deduced by using a matrix multiplication operation method. In this way, the valid data in the relational matrix can be calculated simply by performing a matrix operation on the Q matrix and the K matrix based on the deduced calculation data in the Q matrix and the K matrix, thereby avoiding an operation of the invalid data in the relational matrix, and improving efficiency of attention calculation.

In an implementation, the performing matrix multiplication calculation on the determined calculation data in the Q matrix and the K matrix to obtain the relational matrix includes: performing tiling on the Q matrix to obtain a first matrix tile, and performing tiling on the K matrix to obtain a second matrix tile; and performing matrix multiplication calculation on the determined calculation data in the Q matrix and the K matrix based on the first matrix tile corresponding to the Q matrix and the second matrix tile corresponding to the K matrix, to obtain the relational matrix.

In the solution provided in this application, when the valid data in the relational matrix corresponding to the Q matrix and the K matrix is calculated, tiling may be performed on the Q matrix and the K matrix, to obtain the first matrix tile corresponding to the Q matrix and the second matrix tile corresponding to the K matrix. In this way, the valid data in the relational matrix is calculated by using the first matrix tile and the second matrix tile, so that efficiency of calculating the valid data can be improved, and efficiency of attention calculation can be further improved.

In an implementation, the performing tiling on the Q matrix to obtain the first matrix tile, and performing tiling on the K matrix to obtain the second matrix tile includes: separately performing tiling on the Q matrix and the K matrix based on a specified size, to obtain the first matrix tile corresponding to the Q matrix and the second matrix tile corresponding to the K matrix, where the specified size is determined by a size of the Q matrix or the K matrix.

In the solution provided in this application, in each fifth matrix tile in the relational matrix calculated by using the first matrix tile and the second matrix tile, some fifth matrix tiles may include invalid data. The size for performing tiling on the Q matrix and the K matrix is determined based on the size of the Q matrix or the K matrix, so that efficiency of calculating the third matrix tiles can be ensured, and an amount of invalid data included in some third matrix tiles can be reduced.

In an implementation, before the separately performing tiling on the Q matrix and the K matrix based on the specified size, the method further includes: obtaining a Q matrix, a K matrix, and a V matrix generated by a plurality of sample elements on which attention calculation is to be performed; determining a plurality of candidate sizes, and separately performing, based on each candidate size, tiling on the Q matrix and the K matrix generated by the plurality of sample elements, to obtain a third matrix tile corresponding to the Q matrix generated by the plurality of sample elements and a fourth matrix tile corresponding to the K matrix generated by the plurality of sample elements, where the candidate size is determined by sizes of the Q matrix and the K matrix; sequentially determining, based on the third matrix tile, the fourth matrix tile, and the V matrix generated by the plurality of sample elements that correspond to each candidate size, attention calculation results corresponding to the plurality of sample elements, and determining time consumed for obtaining the attention calculation result each time; and determining the specified size among the plurality of candidate sizes based on the consumed time corresponding to each candidate size.

In this way, different candidate sizes may be tested by using sample elements, to obtain a specified size with highest calculation efficiency. In this way, in actual application, tiling may be performed on the Q matrix and the K matrix based on the determined specified size, thereby improving efficiency of calculating the relationship matrix based on the first matrix tile and the second matrix tile, and improving efficiency of attention calculation.

In an implementation, the method further includes: determining fifth matrix tiles in a same row of the relational matrix as sixth matrix tiles in the relational matrix, where the fifth matrix tiles in the relational matrix are obtained by calculating first matrix tiles in a same row of the Q matrix and second matrix tiles in a same column of the K matrix; obtaining a mask matrix corresponding to each sixth matrix tile, where each mask matrix and the corresponding sixth matrix tile have a same size; and performing masking processing on each sixth matrix tile based on the mask matrix corresponding to each sixth matrix tile, to obtain each masked sixth matrix tile.

In the solution provided in this application, in each fifth matrix tile in the relational matrix calculated by using the first matrix tile and the second matrix tile, some fifth matrix tiles may include invalid data. Therefore, in this application, masking processing may be performed on the invalid data existing in the fifth matrix tiles by row, so as to avoid impact of the invalid data on the attention calculation result.

In an implementation, the performing the operation on the relational matrix and the V matrix to implement the attention calculation includes: performing the operation on the relational matrix and the V matrix based on each masked sixth matrix tile, to obtain an attention calculation result corresponding to the attention calculation. Because the sixth matrix tile mainly includes the valid data in the relational matrix, the matrix multiplication operation is performed on the similarity matrix and the V matrix based on the sixth matrix tile, so that a large amount of invalid data can be prevented from participating in the matrix multiplication operation, and efficiency of performing the matrix multiplication operation can be improved, thereby improving efficiency of attention calculation.

According to a second aspect, an apparatus for attention (attention) calculation in an artificial intelligence model is provided. The apparatus includes:
an obtaining module, configured to obtain a plurality of elements on which attention calculation is to be performed, where an order relationship exists between the plurality of elements;
a generation module, configured to generate a Q matrix, a K matrix, and a V matrix required for attention calculation corresponding to the plurality of elements;
a determining module, configured to determine a location of valid data in a relational matrix obtained by performing matrix multiplication on the Q matrix and the K matrix in the relational matrix, where the valid data identifies a relationship between each element and an element at a specified location in the plurality of elements, where
the determining module is configured to determine calculation data for matrix multiplication calculation in the Q matrix and the K matrix based on the determined location of the valid data in the relational matrix; and
a calculation module, configured to: perform matrix multiplication calculation on the determined calculation data in the Q matrix and the K matrix to obtain the relational matrix; and perform an operation on the relational matrix and the V matrix to implement the attention calculation.

In an implementation, the determining module is configured to: obtain setting information of invalid data in the artificial intelligence model, where the invalid data is a relationship between the plurality of elements that does not need to be considered when the attention calculation is performed; and determine the location of the valid data in the relational matrix obtained by performing the matrix multiplication on the Q matrix and the K matrix in the relational matrix based on the setting information.

In an implementation, the calculation module is configured to: perform tiling on the Q matrix to obtain a first matrix tile, and perform tiling on the K matrix to obtain a second matrix tile; and perform matrix multiplication calculation on the determined calculation data in the Q matrix and the K matrix based on the first matrix tile corresponding to the Q matrix and the second matrix tile corresponding to the K matrix, to obtain the relational matrix.

In an implementation, the calculation module is configured to separately perform tiling on the Q matrix and the K matrix based on a specified size, to obtain the first matrix tile corresponding to the Q matrix and the second matrix tile corresponding to the K matrix, where the specified size is determined by a size of the Q matrix or the K matrix.

In an implementation, the apparatus further includes a test module, configured to: obtain a Q matrix, a K matrix, and a V matrix generated by a plurality of sample elements on which attention calculation is to be performed; determine a plurality of candidate sizes, and separately perform, based on each candidate size, tiling on the Q matrix and the K matrix generated by the plurality of sample elements, to obtain a third matrix tile corresponding to the Q matrix generated by the plurality of sample elements and a fourth matrix tile corresponding to the K matrix generated by the plurality of sample elements, where the candidate size is determined by sizes of the Q matrix and the K matrix; sequentially determine, based on the third matrix tile, the fourth matrix tile, and the V matrix generated by the plurality of sample elements that correspond to each candidate size, attention calculation results corresponding to the plurality of sample elements, and determine time consumed for obtaining the attention calculation result each time; and determine the specified size among the plurality of candidate sizes based on the consumed time corresponding to each candidate size.

In an implementation, the apparatus further includes a masking processing module, configured to: determine fifth matrix tiles in a same row of the relational matrix as sixth matrix tiles in the relational matrix, where the fifth matrix tiles in the relational matrix are obtained by calculating first matrix tiles in a same row of the Q matrix and second matrix tiles in a same column of the K matrix; obtain a mask matrix corresponding to each sixth matrix tile, where each mask matrix and the corresponding sixth matrix tile have a same size; and perform masking processing on each sixth matrix tile based on the mask matrix corresponding to each sixth matrix tile, to obtain each masked sixth matrix tile.

In an implementation, the calculation module is configured to perform the operation on the relational matrix and the V matrix based on each masked sixth matrix tile, to obtain an attention calculation result corresponding to the attention calculation.

According to a third aspect, a compute device is provided. The compute device includes a processor and a memory. The processor is configured to execute instructions stored in the memory, so that the compute device performs the method according to any one of the first aspect and/or the implementations of the first aspect.

According to a fourth aspect, a computer program product including instructions is provided. When the instructions are run by a compute device, the compute device is enabled to perform the method according to any one of the first aspect and/or the implementations of the first aspect.

According to a fifth aspect, a computer-readable storage medium is provided, including computer program instructions. When the computer program instructions are executed by a compute device, the compute device performs the method according to any one of the first aspect and/or the implementations of the first aspect.

### BRIEF DESCRIPTION OF DRAWINGS

FIG. 1 is a diagram of a structure of Transformer according to an embodiment of this application;
FIG. 2 is a flowchart of attention calculation involved in Transformer;
FIG. 3 is a diagram of a structure of a compute device according to an embodiment of this application;
FIG. 4 is a flowchart of a method for attention calculation in an artificial intelligence model according to an embodiment of this application;
FIG. 5 is a diagram of valid data in a relational matrix according to an embodiment of this application;
FIG. 6 is another diagram of valid data in a relational matrix according to an embodiment of this application;
FIG. 7 is still another diagram of valid data in a relational matrix according to an embodiment of this application;
FIG. 8 is a diagram of a matrix multiplication operation according to an embodiment of this application;
FIG. 9 is a diagram of invalid data according to an embodiment of this application;
FIG. 10 is a diagram of a sixth matrix tile and a mask matrix according to an embodiment of this application;
FIG. 11 is a flowchart of a specified size determining method according to an embodiment of this application; and
FIG. 12 is a diagram of a structure of an apparatus for attention calculation in an artificial intelligence model according to an embodiment of this application.

### DESCRIPTION OF EMBODIMENTS

To make objectives, technical solutions, and advantages of this application clearer, the following further describes implementations of this application in detail with reference to the accompanying drawings.

Attention (attention) calculation is a calculation manner widely used in the field of artificial intelligence technologies, and may be used to calculate correlation between a plurality of elements, to help an AI model "understand" the plurality of input elements. Generally, a plurality of elements requiring attention calculation may be tokens included in a sentence, or may be pixels included in an image.

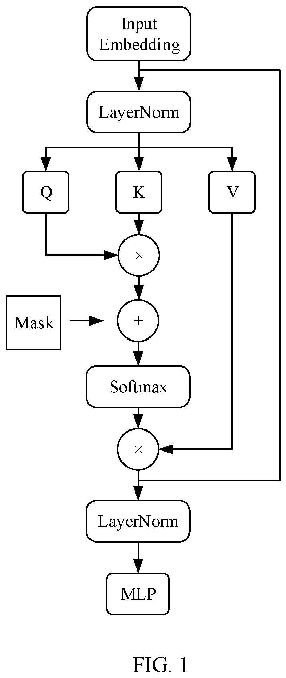

Transformer, as a neural network architecture, is a core structure of a current popular AI large model and involves attention calculation. The following uses Transformer as an example to describe a calculation process of attention calculation. FIG. 1 is a diagram of a structure of Transformer. In FIG. 1, Input Embedding (word embedding) is an input vector converted from input data of an AI large model. LayerNorm is Layer Normalization (layer normalization) used to normalize the input vector. Q, K, and V are respectively a Q matrix, a K matrix, and a V matrix that are generated based on a normalized input vector. Q represents query (Query), K represents key (Key), and V represents value (Value). Mask is a mask matrix, "+" indicates that an addition operation is performed on the matrix, and "×" indicates that a multiplication operation is performed on the matrix. A Softmax layer is used to normalize the matrix.

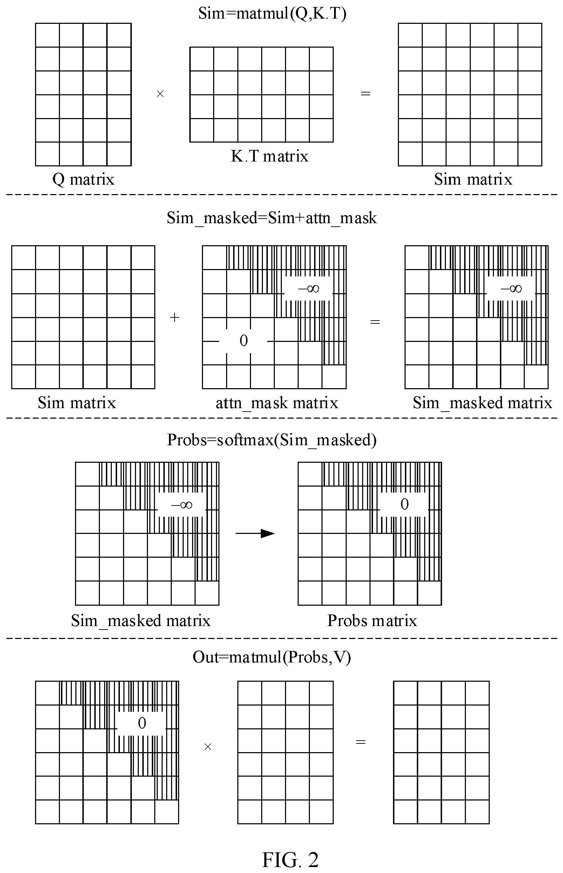

FIG. 2 is a flowchart of attention calculation involved in Transformer. As shown in FIG. 2, the process of attention calculation includes the following steps.

S1: After a Q matrix, a K matrix, and a V matrix are obtained, a multiplication operation may be performed on a transpose matrix (K.T matrix) of the Q matrix and the K matrix, to obtain a similarity matrix (Sim matrix) of the Q matrix and the K matrix, which may also be referred to as a relational matrix.

S2: After the similarity matrix Sim is obtained, masking processing may be performed on the Sim matrix by using a mask matrix, that is, a matrix addition operation is performed on the mask matrix and the Sim matrix, to obtain a masked matrix (Sim-masked matrix).

In an example, values in the lower left triangular region of the mask matrix are all 0, and values in the upper right triangular region are all negative infinity. Therefore, after matrix addition is performed on the mask matrix and the Sim matrix, values in the lower left triangular region of the sim_masked matrix are consistent with values in the lower left triangular region of Sim, and values in the upper right triangular region becomes negative infinity. In the calculation process, negative infinity may be set to a large negative number, for example, -10000.

S3: After the Sim-masked matrix is obtained, a probability matrix is calculated by using a Softmax calculation formula.

In step S3, a maximum value of elements in each row of the Sim-masked matrix may be determined row-wise, and then the maximum value of the elements in each row is subtracted from values of the elements in the row. After the subtraction, element values of elements in the lower left triangular region of the Sim_masked matrix are less than or equal to 0, and values in the upper right triangular region are still negative infinity. Then, exponential calculation is performed on the elements. According to a feature of exponential calculation, element values in the lower left triangular region of the Sim_masked matrix are between 0 and 1, and values in the upper right triangular region are all 0. Next, a sum of elements in each row of the Sim_masked matrix may be calculated, and the probability matrix Probs may be obtained by dividing the elements in each row by the sum of the elements in the corresponding row.

Because the values in the upper right triangular region of Sim_masked are all 0 after the exponential operation, this part is meaningless to summation of the elements in each row when the sum of the elements in each row is calculated, and values obtained by dividing this part by the sum of the elements in the corresponding row are still 0. That is, values in the upper right triangular region of the probability matrix Probs are all 0.

S4: After the probability matrix Probs is obtained, a matrix multiplication operation may be performed on the probability matrix Probs and the V matrix to obtain an output matrix Out.

Because the values in the upper right triangular region of the probability matrix Probs are all 0, this part of elements does not affect a result of performing a matrix multiplication operation. Therefore, performing a matrix multiplication operation on this part of elements is also meaningless.

It can be learned from step S1 to step S4 that the current attention calculation involves a large amount of meaningless calculation. Therefore, efficiency of the current attention calculation needs to be further improved.

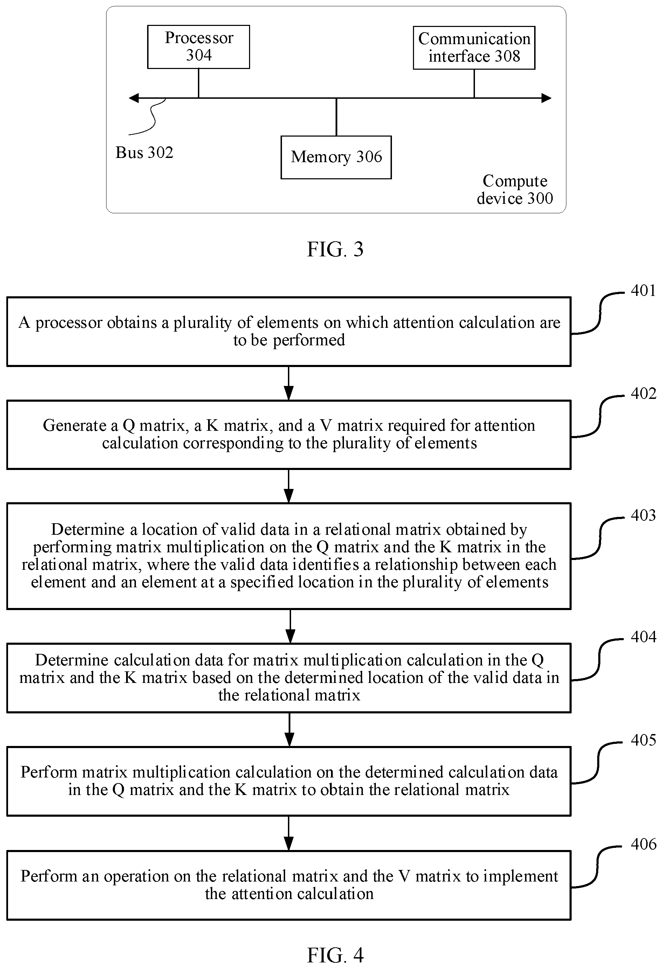

Embodiments of this application provide a method for attention calculation in an artificial intelligence model, which is applicable to attention calculation in various scenarios such as language processing and image processing, to reduce calculation of invalid data in attention calculation, and improve efficiency of attention calculation. FIG. 3 is a diagram of a structure of a compute device for a method for attention calculation in an artificial intelligence model according to an embodiment of this application. As shown in FIG. 3, the compute device 300 may include a bus 302, a processor 304, and a memory 306. Optionally, the compute device 300 may further include a communication interface 308. The processor 304, the memory 306, and the communication interface 308 communicate with each other through the bus 302. The compute device 300 may be a server or a terminal device. It should be understood that quantities of processors and memories in the compute device 300 are not limited in this application. The compute device 300 may be a device for running a model, which may be a terminal or a server. When the compute device 300 is the terminal, the compute device 300 includes but is not limited to a desktop computer, a mobile phone, a laptop, a tablet computer, or the like. When the compute device 300 is the server, the compute device 300 may be an independent server, that is, a server that may independently perform AI model training, or may be any device in a compute cluster that performs AI model training. If the compute device 300 is any device in the cluster, the compute device 300 is configured to perform the attention calculation on a part of data in the AI model. A plurality of virtual machines or containers may run on the compute device, and each virtual machine or container may independently perform the attention calculation.

The bus 302 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used for representation in FIG. 3, but this does not mean that there is only one bus or only one type of bus. The bus 302 may include a path for transmitting information between the components (for example, the memory 306, the processor 304, and the communication interface 308) of the compute device 300.

The processor 304 may include any one or more of processors such as a central processing unit (central processing unit, CPU), a graphics processing unit (graphics processing unit, GPU), a microprocessor (microprocessor, MP), or a digital signal processor (digital signal processor, DSP). Alternatively, the processor may be a system on chip (System on Chip, SoC) including one or more of the foregoing CPU, GPU, MP, and the like. The processor 304 may further include a matrix operation unit. The matrix operation unit may be configured to implement a matrix operation, such as a matrix multiplication operation or a matrix addition operation, in the method for attention calculation in an artificial intelligence model provided in embodiments of this application.

The memory 306 may include a volatile memory (volatile memory), for example, a random access memory (random access memory, RAM). The memory 306 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 306 stores executable program code. The processor 304 executes the executable program code to implement the method for attention calculation in an artificial intelligence model provided in embodiments of this application, for example, to obtain a plurality of elements on which attention calculation is to be performed, where an order relationship exists between the plurality of elements; generate a Q matrix, a K matrix, and a V matrix required for attention calculation corresponding to the plurality of elements; determine a location of valid data in a relational matrix obtained by performing matrix multiplication on the Q matrix and the K matrix in the relational matrix, where the valid data identifies a relationship between each element and an element at a specified location in the plurality of elements; determine calculation data for matrix multiplication calculation in the Q matrix and the K matrix based on the determined location of the valid data in the relational matrix; perform matrix multiplication calculation on the determined calculation data in the Q matrix and the K matrix to obtain the relational matrix; and perform an operation on the relational matrix and the V matrix to implement the attention calculation.

The communication interface 308 uses a transceiver module, for example, but not limited to, a network interface card or a transceiver, to implement communication between the compute device 300 and another device or a communication network.

FIG. 4 is a flowchart of a method for attention calculation in an artificial intelligence model according to an embodiment of this application. The method may be performed by the compute device 300, and further may be performed by the processor 304 included in the compute device 300. As shown in FIG. 4, the method includes the following steps.

Step 401: The processor obtains a plurality of elements on which attention calculation is to be performed.

An order relationship exists between the plurality of elements, and the plurality of elements may be any element suitable for attention calculation.

In an example, the attention calculation method provided in embodiments of this application is applied to an AI large language model. The plurality of elements on which attention calculation is to be performed are input text of the AI large language model, for example, dialog statements entered by a user into the AI large model, or dialog text generated by the large model. Each token in the input text is an element, and an order of the tokens in the input text is the order relationship between the plurality of elements.

In another example, the attention calculation method provided in embodiments of this application is applied to an AI image model. The plurality of elements on which attention calculation is to be performed are input images of the AI image model, for example, images on which semantic segmentation is to be performed. Each pixel in the input image is an element, and a location relationship between a plurality of pixels in the input image is the order relationship between the plurality of elements.

Step 402: Generate a Q matrix, a K matrix, and a V matrix required for attention calculation corresponding to the plurality of elements.

As shown in FIG. 2, during attention calculation, the Q matrix, the K matrix, and the V matrix may be generated for the input text. In an example, after LayerNorm processing is performed on the input text to obtain a normalized input vector, a matrix multiplication operation may be performed on the normalized input vector and weight matrices W^{Q}, W^{K}, and W^{V} respectively, to obtain the Q matrix, the K matrix, and the V matrix.

Step 403: Determine a location of valid data in a relational matrix obtained by performing matrix multiplication on the Q matrix and the K matrix in the relational matrix, where the valid data identifies a relationship between each element and an element at a specified location in the plurality of elements.

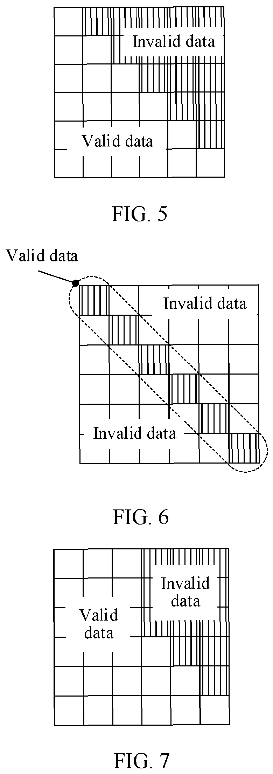

The valid data is data that needs to participate in attention calculation in the relational matrix, that is, a relationship between different elements that need to participate in attention calculation. The specified location is a location of another element that has a relationship with each element. The specified location may be set by technical personnel based on an application scenario of the AI model. After the specified location is determined, the corresponding location of the valid data in the relational matrix is also determined accordingly. FIG. 5 to FIG. 7 respectively show three specified locations and corresponding locations of the valid data in the relational matrix.

FIG. 5 is a diagram of valid data in a relational matrix according to an embodiment of this application. Elements in the lower left triangular region of the relational matrix shown in FIG. 5 are the valid data in the relational matrix. In an example, attention calculation does not need to "focus on" a complete context, and in a generative model, has a characteristic of "looking only forward but not backward" for the input text. Therefore, attention calculation only needs to focus on correlation between each token in the input text and the token itself as well as tokens that follow it. In other words, a specified location corresponding to each element includes locations before the location of the element in the plurality of elements and the location of the element. During attention calculation, only data in the lower left triangular region of the relational matrix needs to participate in the operation to obtain text features.

FIG. 6 is another diagram of valid data in a relational matrix according to an embodiment of this application. Elements located in the diagonal region of the relational matrix shown in FIG. 6 are the valid data in the relational matrix. In an example, when a length of the input text is excessively long, for example, the input text exceeds a specified length threshold, or the input text is an article, attention calculation only needs to focus on correlation between each token and its adjacent tokens. For example, a specified location corresponding to each element is n locations before the location of the element in the plurality of elements and the location of the element. Herein, n may be a preset value. When a quantity of locations before the location of the element is less than n, the specified location is locations before the element and the location of the element. Attention calculation only needs to focus on correlation between the first n tokens before each token.

FIG. 7 is still another diagram of valid data in a relational matrix according to an embodiment of this application. Elements located in the lower left triangular region and the upper left matrix region of the relational matrix shown in FIG. 7 are the valid data in the relational matrix. In an example, the input text includes a dialog statement (such as a question) entered by a user and dialog text generated by the AI large model. In this case, for the dialog statement entered by the user, attention calculation may focus on correlation between tokens in the dialog statement, and for the dialog text generated by the AI large model, attention calculation may focus on "looking only forward but not backward", that is, only needs to focus on correlation between each token in the input text and the token itself as well as tokens that follow it. In other words, a specified location corresponding to each element may include locations before the location of the element in the plurality of elements, or may include n locations before the location of the element in the plurality of elements and the location of the element. During attention calculation, only data located in the lower left triangular region and the upper left matrix region of the relational matrix needs to participate in the operation to obtain text features.

In an example, setting information of invalid data in the artificial intelligence model may be obtained, to determine the location of the valid data in the relational matrix obtained by performing the matrix multiplication on the Q matrix and the K matrix in the relational matrix based on the setting information. The invalid data is data other than the valid data in the relational matrix, that is, a relationship between the plurality of elements that does not need to be considered when the attention calculation is performed.

The setting information of the invalid data in the artificial intelligence model may include a location of the invalid data in the relational matrix. In this way, a location other than the invalid data in the relational matrix is the location corresponding to the valid data. The setting information may be set based on the specified location. The setting information may be a preset mask matrix whose size is the same as that of the relational matrix, and each element value in the mask matrix indicates whether an element at a same location in the relational matrix is invalid data or valid data. For example, each element in the mask matrix consists of "0" and "-10000", where the element "0" indicates that the element at the same location in the relational matrix is the valid data, and the element "-10000" indicates that the element at the same location in the relational matrix is the invalid data. Therefore, the locations of the valid data and the invalid data in the relational matrix may be determined by using the mask matrix.

Step 404: Determine calculation data for matrix multiplication calculation in the Q matrix and the K matrix based on the determined location of the valid data in the relational matrix.

After the location of the valid data in the relational matrix is determined, locations of the calculation data used to calculate the valid data in the Q matrix and a K^{T} matrix (transpose matrix of the K matrix) can be deduced by using a matrix multiplication operation method. For example, if the valid data is in the i^{th} row and j^{th} column of the relational matrix, the calculation data for calculating the valid data is an element in the i^{th} row of the Q matrix and an element in the j^{th} column of the K^{T} matrix.

In this way, the valid data in the relational matrix can be calculated simply by performing a matrix operation on the Q matrix and the K matrix based on the deduced calculation data in the Q matrix and the K matrix, thereby avoiding an operation of the invalid data in the relational matrix, and improving efficiency of attention calculation.

Step 405: Perform matrix multiplication calculation on the determined calculation data in the Q matrix and the K matrix to obtain the relational matrix.

During implementation, the matrix multiplication operation may be performed on the calculation data in the Q matrix and the K matrix through a vector operation unit included in the processor, to obtain each piece of valid data included in the relational matrix.

In an implementation, to improve efficiency of calculating the relational matrix, after the Q matrix and the K^{T} matrix are obtained, tiling (blocking) processing may be first performed on the Q matrix and the K^{T} matrix, to obtain a plurality of tiling blocks (which may be referred to as a first matrix tile) included in the Q matrix and a plurality of tiling blocks (which may be referred to as a second matrix tile) included in the K^{T} matrix. Then, the valid data in the relational matrix corresponding to the Q matrix and the K matrix may be calculated based on the first matrix tile and the second matrix tile.

Correspondingly, processing in step 404 may be replaced with: determining the first matrix tile and the second matrix tile for matrix multiplication calculation in the Q matrix and the K^{T} matrix based on the determined location of the valid data in the relational matrix.

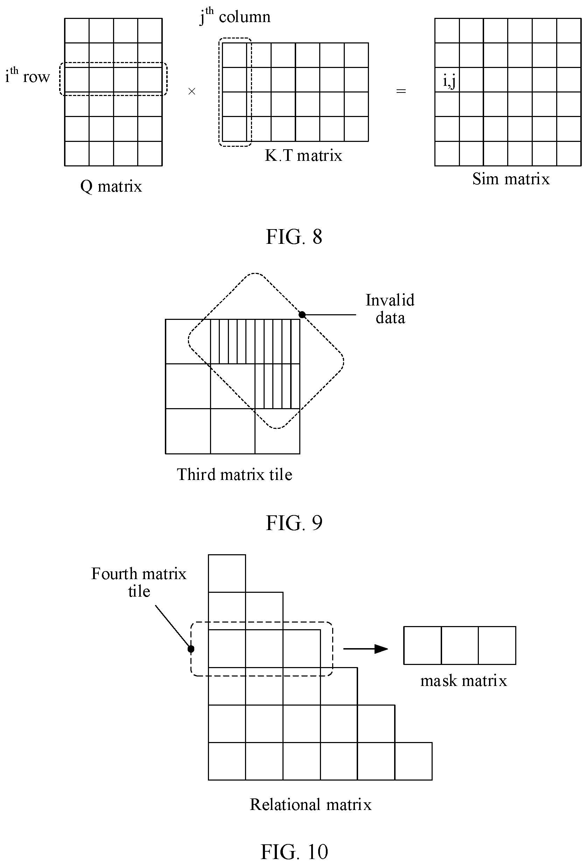

FIG. 8 is a diagram of a matrix multiplication operation according to an embodiment of this application. Elements in the lower left triangular region of the relational matrix in FIG. 8 are the valid data. Therefore, a third matrix tile including valid data in the relational matrix may be calculated based on a first matrix tile in each row of the Q matrix and a second matrix tile in each column of the K^{T} matrix. For example, a third matrix tile in the i^{th} row and j^{th} column of the relational matrix is calculated based on a first matrix tile in the i^{th} row of the Q matrix and a second matrix tile in the j^{th} column of the K^{T} matrix. Herein, i is greater than or equal to j.

During implementation, the first matrix tile in each row of the Q matrix and the second matrix tile in each column of the transpose matrix of the K matrix (K^{T} matrix) may be calculated according to a specified calculation order, to sequentially obtain fifth matrix tiles included in the relational matrix.

In embodiments of this application, in a process of performing the matrix multiplication operation on the Q matrix and the K^{T} matrix to obtain the corresponding relational matrix, there is no need to calculate all elements in the relational matrix. Therefore, a calculation amount of the matrix multiplication operation during attention calculation is reduced, and calculation efficiency of attention calculation can be improved.

Step 406: Perform an operation on the relational matrix and the V matrix to implement the attention calculation.

Because the relational matrix lacks invalid data, the matrix multiplication operation may be performed on the relational matrix and the V matrix by using only the invalid data in the relational matrix. In this way, in the calculation process, calculation of the invalid data can be omitted, thereby improving efficiency of attention calculation.

When the relational matrix is calculated by using the first matrix tile in the Q matrix and the second matrix tile in the K^{T} matrix, there is a fifth matrix tile in the relational matrix that includes some invalid data. For example, each third matrix tile located on a diagonal of the relational matrix in FIG. 8 includes invalid data. As shown in FIG. 9, when a size of the third matrix tile is 3×3, three elements on the upper right of the third matrix tile are invalid data. Therefore, to avoid impact of this part of invalid data on attention calculation, an embodiment of this application further provides a masking processing method, including:
determining fifth matrix tiles in a same row of the relational matrix as sixth matrix tiles; and performing masking processing on each sixth matrix tile based on the mask matrix corresponding to each sixth matrix tile, to obtain each masked sixth matrix tile.

During implementation, after the fifth matrix tiles in the relational matrix are calculated by using the first matrix tile in the Q matrix and the second matrix tile in the K^{T} matrix, the fifth matrix tiles corresponding to a same tiling row of the relational matrix may be determined as the sixth matrix tiles in the relational matrix. After each sixth matrix tile is determined, the mask matrix corresponding to each sixth matrix tile may be obtained based on a location of the sixth matrix tile in the relational matrix.

FIG. 10 is a diagram of a sixth matrix tile and a mask matrix according to an embodiment of this application. In an example, a size of each mask matrix is the same as a size of a corresponding sixth matrix tile, and each mask matrix includes an element whose value is 0 and an element whose value is negative infinity. A location of the element whose value is 0 in the mask matrix is the same as a location of valid data in the corresponding sixth matrix tile, and a location of the element whose value is negative infinity in the mask matrix is the same as a location of invalid data in the corresponding sixth matrix tile.

After the mask matrix corresponding to each sixth matrix tile is obtained, a matrix addition operation may be performed on each sixth matrix tile and the corresponding mask matrix, to implement masking processing on each fourth matrix tile to obtain the masked sixth matrix tile. After the masked sixth matrix tile is obtained, the operation may be performed on the relational matrix and the V matrix based on each masked sixth matrix tile and the V matrix, to obtain an attention calculation result corresponding to the attention calculation.

During implementation, after the masked sixth matrix tile is obtained, elements in each row of each sixth matrix tile may be first normalized. That is, a maximum value of elements in each row of the sixth matrix tile is determined, and then the maximum value of the elements in the row is subtracted from values of the elements in the row. Then, exponential calculation is performed on each element. Next, a sum of elements in each row is calculated, and valid data in the probability matrix is obtained by dividing the elements in each row by the sum of the elements in the corresponding row.

After a quantity of the plurality of elements on which attention calculation is to be performed is determined, sizes of Q, K, and V can also be determined, and a specified size for performing tiling on the Q matrix and the K^{T} matrix can also be determined, that is, sizes of the first matrix tile, the second matrix tile, and the fifth matrix tile can be determined. In this way, a size of each sixth matrix tile and a location of invalid data in each sixth matrix tile can also be determined, and the mask matrix corresponding to each sixth matrix tile can also be determined. Therefore, a corresponding mask matrix is prestored based on a location of each sixth matrix tile in the relational matrix, and after the sixth matrix tile is calculated, masking processing may be performed on the sixth matrix tile based on the prestored mask matrix.

After the valid data in the probability matrix is obtained, a matrix multiplication operation on the probability matrix and the V matrix may be implemented based on the valid data included in the probability matrix, to obtain a matrix multiplication operation result. Then, the matrix multiplication operation result may be normalized to obtain an attention calculation result. For example, the attention calculation result may be a text feature corresponding to the input text.

In embodiments of this application, because the sixth matrix tile in the relational matrix mainly includes valid data, when the corresponding probability matrix is calculated based on the sixth matrix tile, a large amount of invalid data can be prevented from participating in calculation, thereby improving efficiency of generating the probability matrix. In addition, because the probability matrix is calculated mainly by using the valid data in the relational matrix, the calculated probability matrix includes only the valid data. Therefore, when the matrix multiplication operation on the probability matrix and the V matrix is implemented by using the valid data in the probability matrix, participation of the invalid data can be avoided, thereby improving efficiency of performing the matrix multiplication operation.

It can be learned that, in embodiments of this application, efficiency of performing the matrix multiplication operation on the Q matrix and the K matrix, efficiency of performing corresponding masking processing on the relational matrix, efficiency of calculating the probability matrix, and efficiency of performing the matrix multiplication operation on the probability matrix and the V matrix can be improved during attention calculation. Therefore, in embodiments of this application, efficiency of generating the text feature corresponding to the input text can be improved.

In an implementation, the specified size for performing tiling on the Q matrix, the K matrix, and the V matrix may be determined by a size of the Q matrix or the K matrix, that is, may be determined based on a length of the input text. In an example, a correspondence between the Q matrix or the K matrix and the specified size may be prestored. During implementation, the specified size for performing tiling on the Q matrix and the K matrix may be determined based on the correspondence.

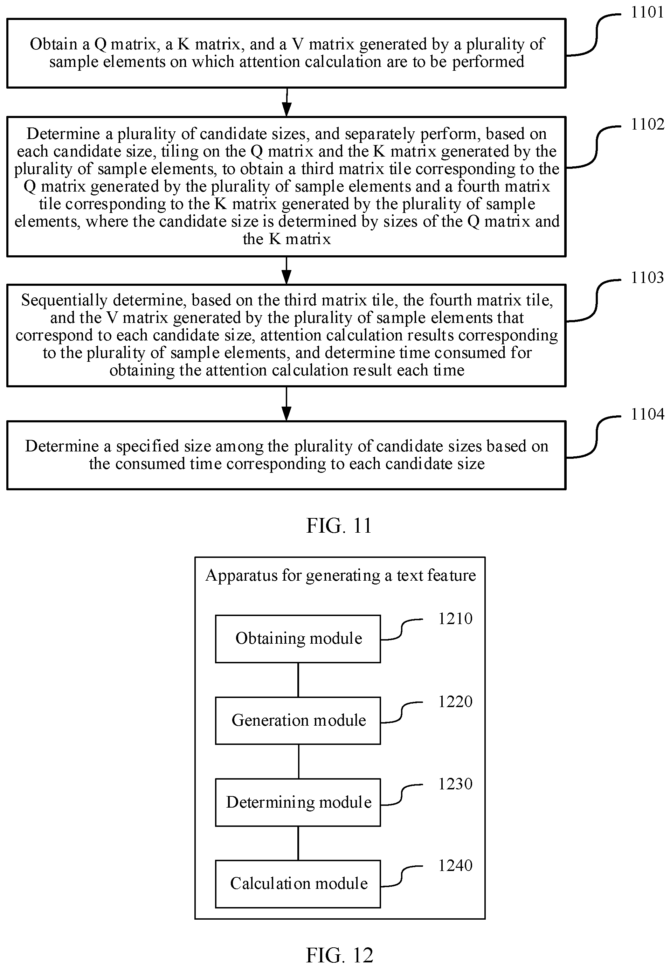

FIG. 11 is a flowchart of a method for determining a specified size for performing tiling processing on a Q matrix and a K matrix according to an embodiment of this application. In an example, the method may be used in a training phase of an AI large model. As shown in FIG. 11, the method includes the following steps.

Step 1101: Obtain a Q matrix, a K matrix, and a V matrix generated by a plurality of sample elements on which attention calculation is to be performed.

The plurality of sample elements may be sample text for training the AI large model. For generation of the Q matrix, the K matrix, and the V matrix corresponding to the sample text, refer to the processing in step 402. Details are not described herein again.

Step 1102: Determine a plurality of candidate sizes, and separately perform, based on each candidate size, tiling on the Q matrix and the K matrix generated by the plurality of sample elements, to obtain a third matrix tile corresponding to the Q matrix generated by the plurality of sample elements and a fourth matrix tile corresponding to the K matrix generated by the plurality of sample elements, where the candidate size is determined by sizes of the Q matrix and the K matrix.

The candidate size may be preset by technical personnel based on the sizes of the Q matrix and the K matrix, for example, 2×2, 4×4, or 8×8. After the candidate size is determined, tiling processing may be separately performed on the Q matrix and the transpose matrix (K^{T} matrix) corresponding to the K matrix based on the candidate size, to obtain each third matrix tile included in the Q matrix and each fourth matrix tile included in the K^{T} matrix. In an example, when the specified size is m×n, where m is not equal to n, tiling may be performed on the Q matrix based on the size of m×n, and tiling may be performed on the K^{T} matrix based on a size of n×m.

Step 1103: Sequentially determine, based on the third matrix tile, the fourth matrix tile, and the V matrix generated by the plurality of sample elements that correspond to each candidate size, attention calculation results corresponding to the plurality of sample elements, and determine time consumed for obtaining the attention calculation result each time.

Step 1104: Determine the specified size among the plurality of candidate sizes based on the consumed time corresponding to each candidate size.

In implementation, in a process of training the AI model, tiling may be performed on the Q matrix and the K matrix based on each candidate size, to obtain the third matrix tile and the fourth matrix tile, and generate a text feature corresponding to test text. For processing of performing attention calculation based on the third matrix tile and the fourth matrix tile, refer to the processing of performing attention calculation based on the first matrix tile and the second matrix tile in steps 404 and 405. Details are not described herein again.

For the third matrix tile and the fourth matrix tile of each candidate size, time consumed for generating the text feature by using the third matrix tile and the fourth matrix tile of each candidate size may be recorded, and a candidate size corresponding to lowest consumed time is determined as the specified size in the foregoing embodiment. In this way, reduction in efficiency of attention calculation caused by an excessively large quantity of matrix tiles caused by an excessively small specified size can be avoided, thereby avoiding reduction in efficiency of attention calculation caused by a large amount of invalid data in the matrix tile caused by an excessively large specified size.

Based on a same inventive concept, an embodiment of this application further provides an apparatus for attention calculation in an artificial intelligence model. The apparatus may be the foregoing compute device that performs the method for attention calculation in an artificial intelligence model, or a program that is run in the compute device and that is used to perform the method for attention calculation in an artificial intelligence model. FIG. 12 is a diagram of a structure of an apparatus for attention calculation in an artificial intelligence model according to an embodiment of this application. As shown in FIG. 12, the apparatus includes:
an obtaining module 1210, configured to obtain a plurality of elements on which attention calculation is to be performed, where an order relationship exists between the plurality of elements, specifically configured to implement an obtaining function of step 401 and a hidden step thereof;
a generation module 1220, configured to generate a Q matrix, a K matrix, and a V matrix required for attention calculation corresponding to the plurality of elements, specifically configured to implement a generation function of step 402 and a hidden step thereof;
a determining module 1230, configured to: determine a location of valid data in a relational matrix obtained by performing matrix multiplication on the Q matrix and the K matrix in the relational matrix, where the valid data identifies a relationship between each element and an element at a specified location in the plurality of elements; and determine calculation data for matrix multiplication calculation in the Q matrix and the K matrix based on the determined location of the valid data in the relational matrix, specifically configured to implement determining functions of steps 403 and 404 and hidden steps thereof; and
a calculation module 1240, configured to: perform matrix multiplication calculation on the determined calculation data in the Q matrix and the K matrix to obtain the relational matrix; and perform an operation on the relational matrix and the V matrix to implement the attention calculation, specifically configured to implement a calculation function of step 405 and a hidden step thereof.

In an implementation, the determining module 1230 is configured to: obtain setting information of invalid data in the artificial intelligence model, where the invalid data is a relationship between the plurality of elements that does not need to be considered when the attention calculation is performed; and determine the location of the valid data in the relational matrix obtained by performing the matrix multiplication on the Q matrix and the K matrix in the relational matrix based on the setting information.

In an implementation, the calculation module 1240 is configured to: perform tiling on the Q matrix to obtain a first matrix tile, and perform tiling on the K matrix to obtain a second matrix tile; and perform matrix multiplication calculation on the determined calculation data in the Q matrix and the K matrix based on the first matrix tile corresponding to the Q matrix and the second matrix tile corresponding to the K matrix, to obtain the relational matrix.

In an implementation, the calculation module 1240 is configured to separately perform tiling on the Q matrix and the K matrix based on a specified size, to obtain the first matrix tile corresponding to the Q matrix and the second matrix tile corresponding to the K matrix, where the specified size is determined by a size of the Q matrix or the K matrix.

In an implementation, the apparatus further includes a test module, configured to: obtain a Q matrix, a K matrix, and a V matrix generated by a plurality of sample elements on which attention calculation is to be performed; determine a plurality of candidate sizes, and separately perform, based on each candidate size, tiling on the Q matrix and the K matrix generated by the plurality of sample elements, to obtain a third matrix tile corresponding to the Q matrix generated by the plurality of sample elements and a fourth matrix tile corresponding to the K matrix generated by the plurality of sample elements, where the candidate size is determined by sizes of the Q matrix and the K matrix; sequentially determine, based on the third matrix tile, the fourth matrix tile, and the V matrix generated by the plurality of sample elements that correspond to each candidate size, attention calculation results corresponding to the plurality of sample elements, and determine time consumed for obtaining the attention calculation result each time; and determine the specified size among the plurality of candidate sizes based on the consumed time corresponding to each candidate size.

In an implementation, the apparatus further includes a masking processing module, configured to: determine fifth matrix tiles in a same row of the relational matrix as sixth matrix tiles in the relational matrix, where the fifth matrix tiles in the relational matrix are obtained by calculating first matrix tiles in a same row of the Q matrix and second matrix tiles in a same column of the K matrix; obtain a mask matrix corresponding to each sixth matrix tile, where each mask matrix and the corresponding sixth matrix tile have a same size; and perform masking processing on each sixth matrix tile based on the mask matrix corresponding to each sixth matrix tile, to obtain each masked sixth matrix tile.

In an implementation, the calculation module 1240 is configured to perform the operation on the relational matrix and the V matrix based on each masked sixth matrix tile, to obtain an attention calculation result corresponding to the attention calculation.

Division into the modules in embodiments of this application is an example, and is merely logical function division. During actual implementation, another division manner may be used. In addition, the functional modules in embodiments of this application may be integrated in one processor, or may exist as physically independent. Alternatively, two or more modules may be integrated into one module. The integrated module may be implemented in a form of hardware, or may be implemented in a form of a software functional module. In addition, the apparatus for attention calculation in an artificial intelligence model provided in the foregoing embodiment and the embodiment of the method for attention calculation in an artificial intelligence model belong to a same concept. For a specific implementation process, refer to the method embodiment. Details are not described herein again.

If the integrated module is implemented in a form of a software functional module and is sold or used as an independent product, the integrated module may be stored in a computer-readable storage medium. Based on such an understanding, the technical solutions of this application essentially, or the part contributing to the conventional technology, or all or a part of the technical solutions may be embodied in a form of a software product. The computer software product is stored in a storage medium, and includes several instructions for instructing a terminal device (which may be a personal computer, a mobile phone, a network device, or the like) or a processor (processor) to perform all or some steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

An embodiment of this application further provides a computer program product including instructions. The computer program product may be software or a program product that includes the instructions and that can run on a compute device or can be stored in any usable medium. When the computer program product runs on at least one compute device, the at least one compute device is enabled to perform the method for attention calculation in an artificial intelligence model provided in embodiments of this application.

An embodiment of this application further provides a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instructs the compute device to perform the method for attention calculation in an artificial intelligence model provided in embodiments of this application.

In this application, terms such as "first" and "second" are used to distinguish between same items or similar items that have basically same effects and functions. It should be understood that there is no logical or time sequence dependency between "first" and "second", and a quantity and an execution sequence are not limited. It should also be understood that, although the following descriptions use terms such as "first" and "second" to describe various elements, these elements should not be limited by the terms. These terms are simply used to distinguish one element from another. For example, without departing from the scope of various examples, the first matrix tile may be referred to as a second matrix tile, and similarly, the second matrix tile may be referred to as a first matrix tile. Both the first matrix tile and the second matrix tile may be collectively referred to as a matrix tile, and in some cases, may be separate and different matrix tiles.

In this application, the term "at least one" means one or more, and the term "a plurality of" means two or more.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A method for attention (attention) calculation in an artificial intelligence model, wherein the method comprises:
obtaining a plurality of elements on which attention calculation is to be performed, wherein an order relationship exists between the plurality of elements;
generating a Q matrix, a K matrix, and a V matrix required for attention calculation corresponding to the plurality of elements;
determining a location of valid data in a relational matrix obtained by performing matrix multiplication on the Q matrix and the K matrix in the relational matrix, wherein the valid data identifies a relationship between each element and an element at a specified location in the plurality of elements;
determining calculation data for matrix multiplication calculation in the Q matrix and the K matrix based on the determined location of the valid data in the relational matrix;
performing matrix multiplication calculation on the determined calculation data in the Q matrix and the K matrix to obtain the relational matrix; and
performing an operation on the relational matrix and the V matrix to implement the attention calculation.

2. The method according to claim 1, wherein the determining the location of the valid data in the relational matrix obtained by performing the matrix multiplication on the Q matrix and the K matrix in the relational matrix comprises:
obtaining setting information of invalid data in the artificial intelligence model, wherein the invalid data is a relationship between the plurality of elements that does not need to be considered when the attention calculation is performed; and
determining the location of the valid data in the relational matrix obtained by performing the matrix multiplication on the Q matrix and the K matrix in the relational matrix based on the setting information, wherein the element at the specified location is determined by the setting information.

3. The method according to claim 1 or 2, wherein the performing matrix multiplication calculation on the determined calculation data in the Q matrix and the K matrix to obtain the relational matrix comprises:
performing tiling on the Q matrix to obtain a first matrix tile, and performing tiling on the K matrix to obtain a second matrix tile; and
performing matrix multiplication calculation on the determined calculation data in the Q matrix and the K matrix based on the first matrix tile corresponding to the Q matrix and the second matrix tile corresponding to the K matrix, to obtain the relational matrix.

4. The method according to claim 3, wherein the performing tiling on the Q matrix to obtain the first matrix tile, and performing tiling on the K matrix to obtain the second matrix tile comprises:
separately performing tiling on the Q matrix and the K matrix based on a specified size, to obtain the first matrix tile corresponding to the Q matrix and the second matrix tile corresponding to the K matrix, wherein the specified size is determined by a size of the Q matrix or the K matrix.

5. The method according to claim 4, wherein before the separately performing tiling on the Q matrix and the K matrix based on the specified size, the method further comprises:
obtaining a Q matrix, a K matrix, and a V matrix generated by a plurality of sample elements on which attention calculation is to be performed;
determining a plurality of candidate sizes, and separately performing, based on each candidate size, tiling on the Q matrix and the K matrix generated by the plurality of sample elements, to obtain a third matrix tile corresponding to the Q matrix generated by the plurality of sample elements and a fourth matrix tile corresponding to the K matrix generated by the plurality of sample elements, wherein the candidate size is determined by sizes of the Q matrix and the K matrix;
sequentially determining, based on the third matrix tile, the fourth matrix tile, and the V matrix generated by the plurality of sample elements that correspond to each candidate size, attention calculation results corresponding to the plurality of sample elements, and determining time consumed for obtaining the attention calculation result each time; and
determining the specified size among the plurality of candidate sizes based on the consumed time corresponding to each candidate size.

6. The method according to any one of claims 3 to 5, wherein the method further comprises:
determining fifth matrix tiles in a same row of the relational matrix as sixth matrix tiles in the relational matrix, wherein the fifth matrix tiles in the relational matrix are obtained by calculating first matrix tiles in a same row of the Q matrix and second matrix tiles in a same column of the K matrix;
obtaining a mask matrix corresponding to each sixth matrix tile, wherein each mask matrix and the corresponding sixth matrix tile have a same size; and
performing masking processing on each sixth matrix tile based on the mask matrix corresponding to each sixth matrix tile, to obtain each masked sixth matrix tile.

7. The method according to claim 6, wherein the performing the operation on the relational matrix and the V matrix to implement the attention calculation comprises:
performing the operation on the relational matrix and the V matrix based on each masked sixth matrix tile, to obtain an attention calculation result corresponding to the attention calculation.

8. An apparatus for attention (attention) calculation in an artificial intelligence model, wherein the apparatus comprises:
an obtaining module, configured to obtain a plurality of elements on which attention calculation is to be performed, wherein an order relationship exists between the plurality of elements;
a generation module, configured to generate a Q matrix, a K matrix, and a V matrix required for attention calculation corresponding to the plurality of elements;
a determining module, configured to: determine a location of valid data in a relational matrix obtained by performing matrix multiplication on the Q matrix and the K matrix in the relational matrix, wherein the valid data identifies a relationship between each element and an element at a specified location in the plurality of elements; and determine calculation data for matrix multiplication calculation in the Q matrix and the K matrix based on the determined location of the valid data in the relational matrix; and
a calculation module, configured to: perform matrix multiplication calculation on the determined calculation data in the Q matrix and the K matrix to obtain the relational matrix; and perform an operation on the relational matrix and the V matrix to implement the attention calculation.

9. The apparatus according to claim 8, wherein the determining module is configured to:
obtain setting information of invalid data in the artificial intelligence model, wherein the invalid data is a relationship between the plurality of elements that does not need to be considered when the attention calculation is performed; and
determine the location of the valid data in the relational matrix obtained by performing the matrix multiplication on the Q matrix and the K matrix in the relational matrix based on the setting information, wherein the element at the specified location is determined by the setting information.

10. The apparatus according to claim 8 or 9, wherein the calculation module is configured to:
perform tiling on the Q matrix to obtain a first matrix tile, and perform tiling on the K matrix to obtain a second matrix tile; and
perform matrix multiplication calculation on the determined calculation data in the Q matrix and the K matrix based on the first matrix tile corresponding to the Q matrix and the second matrix tile corresponding to the K matrix, to obtain the relational matrix.

11. The apparatus according to claim 10, wherein the calculation module is configured to:
separately perform tiling on the Q matrix and the K matrix based on a specified size, to obtain the first matrix tile corresponding to the Q matrix and the second matrix tile corresponding to the K matrix, wherein the specified size is determined by a size of the Q matrix or the K matrix.

12. The apparatus according to claim 11, wherein the apparatus further comprises a test module, configured to:
obtain a Q matrix, a K matrix, and a V matrix generated by a plurality of sample elements on which attention calculation is to be performed;
determine a plurality of candidate sizes, and separately perform, based on each candidate size, tiling on the Q matrix and the K matrix generated by the plurality of sample elements, to obtain a third matrix tile corresponding to the Q matrix generated by the plurality of sample elements and a fourth matrix tile corresponding to the K matrix generated by the plurality of sample elements, wherein the candidate size is determined by sizes of the Q matrix and the K matrix;
sequentially determine, based on the third matrix tile, the fourth matrix tile, and the V matrix generated by the plurality of sample elements that correspond to each candidate size, attention calculation results corresponding to the plurality of sample elements, and determine time consumed for obtaining the attention calculation result each time; and
determine the specified size among the plurality of candidate sizes based on the consumed time corresponding to each candidate size.

13. The apparatus according to any one of claims 10 to 12, wherein the apparatus further comprises a masking processing module, configured to:
determine fifth matrix tiles in a same row of the relational matrix as sixth matrix tiles in the relational matrix, wherein the fifth matrix tiles in the relational matrix are obtained by calculating first matrix tiles in a same row of the Q matrix and second matrix tiles in a same column of the K matrix;
obtain a mask matrix corresponding to each sixth matrix tile, wherein each mask matrix and the corresponding sixth matrix tile have a same size; and
perform masking processing on each sixth matrix tile based on the mask matrix corresponding to each sixth matrix tile, to obtain each masked sixth matrix tile.

14. The apparatus according to claim 13, wherein the calculation module is configured to:
perform the operation on the relational matrix and the V matrix based on each masked sixth matrix tile, to obtain an attention calculation result corresponding to the attention calculation.

15. A computer program product comprising instructions, wherein when the instructions are run by a compute device, the compute device is enabled to perform the method according to any one of claims 1 to 7.

16. A computer-readable storage medium, comprising computer program instructions, wherein when the computer program instructions are executed by a compute device, the compute device performs the method according to any one of claims 1 to 7.
